# EUROPÄISCHE PATENTSCHRIFT

(11) **EP 4 043 156 B1**
(45) Veröffentlichungstag und Bekanntmachung des Hinweises auf die Patenterteilung: **28.08.2024**
(21) Anmeldenummer: 22155567.5
(22) Anmeldetag: 08.02.2022
(51) Int. Cl.: B25J 1/00, B25J 11/00

(54) **GREIFVORRICHTUNG ZUM HYGIENISCHEN GREIFEN VON OBJEKTEN**
GRIPPING DEVICE FOR THE HYGIENIC GRIPPING OF OBJECTS
DISPOSITIF DE PRÉHENSION PERMETTANT D'APPRÉHENDER DE MANIÈRE HYGIÉNIQUE DES OBJETS

(30) Priorität: 11.02.2021 DE 102021103285
(43) Veröffentlichungstag der Anmeldung: 17.08.2022
(73) Patentinhaber: Oheim, Paul-M., 52062 Aachen (DE)
(72) Erfinder: Oheim, Paul-M., 52062 Aachen (DE)
(74) Vertreter: Kohlmann, Kai

(56) Entgegenhaltungen:
- US-A1- 2004 232 716
- US-A1- 2006 214 442
- US-A1- 2012 168 047
- US-B1- 7 523 972
- US-B1- 8 714 604
- US-B1- 9 956 691
- US-B2- 8 287 015

## Beschreibung

Die Erfindung betrifft eine Greifvorrichtung zum hygienischen Greifen von Objekten umfassend ein Greifwerkzeug mit mindestens einer ein zu greifendes Objekt fixierenden Wirkstelle.

Zu den Greifwerkzeugen gehören insbesondere Handwerkzeuge, wie beispielsweise Zangen und Gabeln, sowie im Bereich der Automatisierungstechnik zum Einsatz gelangende Greifer.

Bei einer Zange als zweischenkliges Greifwerkzeug wirken die Wirkstellen, auch als Greifbacken bezeichnet, gegenläufig auf das zu fixierende Objekt ein. Typische Gelenkzangen funktionieren nach dem Hebelprinzip. Zwei zweiseitige Hebel sind miteinander durch ein Gelenk, fachsprachlich als Gewerbe bezeichnet, verbunden. Die Griffe bilden üblicherweise die längeren Hebelarme, während die kürzeren Hebelarme den Zangenkopf mit den Wirkstellen bilden.

Ein Greifer wird zum Erfassen und Handhaben von Objekten in der Automatisierungstechnik, insbesondere der Robotik verwendet. Die Wirkpaarung zwischen Greifer und Objekt wird insbesondere über Kraft- oder Formpaarung erzielt. Beim Einsatz einer Kraftpaarung wird der Halt durch das Ausüben eines Druckes auf die Objektoberfläche erzeugt. Bei der Formpaarung erfolgt das Halten über eine Umschließung des Objektes.

Greifer können als mechanische, pneumatische oder magnetische Greifer ausgeführt sein. Mechanische Greifer können als Greifzange oder als Einfinger- oder Mehrfingergreifer ausgestaltet sein. Pneumatische Greifer, auch als Vakuumgreifer bezeichnet, saugen das Objekt an, um es zu greifen und zu handhaben. Das Ansaugen erfolgt üblicherweise über eine Ansaugöffnung, die mit einem gegenüber dem Umgebungsdruck niedrigeren Druck beaufschlagbar ist. Die Oberfläche des Objektes muss glatt, sauber und luftundurchlässig sein.

Bei magnetischen Greifern werden Permanentmagnetgreifer und Elektromagnetgreifer unterschieden. Permanentmagnetgreifer benötigen Zusatzeinrichtungen zum Abstreifen des gegriffenen magnetischen Objektes. Bei einem Elektromagnetgreifer kann der Elektromagnet durch ein- und ausschalten der elektrischen Energie geschaltet werden, sodass sich das magnetische Objekt greifen und auch wieder absetzen lässt.

Die Wirkstellen der vorgenannten Greifwerkzeuge, beispielsweise die Greifbacken der Zange oder des mechanischen Greifers, die Saugöffnung des pneumatischen Greifers oder der Elektromagnet des magnetischen Greifers sind jeweils an mindestens einem Greifglied des Greifwerkzeugs angeordnet. Mechanische Greifer weisen in der Regel mindestens zwei gegenläufig auf das Objekt fixierend einwirkende Greifglieder auf, während pneumatische und magnetische Greifer grundsätzlich lediglich ein Greifglied erfordern.

Neben dem Greifwerkzeug verfügt eine Greifvorrichtung zumeist über weitere Komponenten, beispielsweise einen Antrieb, ein Greifergetriebe sowie ein Gestell, an dem die verschiedenen Komponenten der Greifvorrichtung angeordnet sind.

Greifvorrichtungen zum hygienischen Greifen von Objekten sind aus dem Stand der Technik bekannt:
Die WO 2006/032603 A1 offenbart eine Greifvorrichtung mit einem Greifer für Behälter, der zwei Finger umfasst, wobei die äußeren Abschnitte der Finger mit einem Material beschichtet sind, das ein antimikrobielles Mittel enthält.
Die Greifvorrichtung kann an einem Industrieroboter befestigt werden.
Die JP 2002 144268 A betrifft einen Sauggreifer mit einem Saugnapf mit Saugkissen, Luftansaugloch und einem Ansaugteil aus antibakteriellem Material zum Sterilisieren von Keimen, die an einem benutzten Behälter haften.
Die WO 2020/094225 A1 betrifft einen selbstdesinfizierenden Roboter, der eine Außenfläche und mindestens eine lichtemittierende Komponente umfasst, wobei die lichtemittierende Komponente so angeordnet ist, dass sie mindestens einen Teil der Außenfläche mit Desinfektionslicht beleuchtet.
Die CN 105729496 A offenbart eine automatische, selbstreinigende Greifvorrichtung. Die automatische Greifvorrichtung umfasst eine Basis, wobei ein Stützteil, mehrere sequentiell miteinander verbundene Arme, ein mechanischer Greifer in Form einer Greifklaue, Saugscheiben und eine Bürste an der Basis angeordnet sind. Die Bürste ist am äußeren Ende der verbundenen Arme angeordnet und kann sich frei drehen.
Die DE 28 54 918 A1 offenbart ein Greifgerät zum Einsammeln organischer Auswürfe von Tieren in eine Hülle umfassend einen nach Art eines Teleskops zusammenschiebbaren Stock, der aus mindestens einem Außenelement und mindestens einem Innenelement besteht, wobei das eine Ende des Innenelements in einem Handgriff ausläuft und das entgegengesetzte Ende mit einer mechanischen Hand versehen ist, die sich bei Verschieben des Innenelements in der einen Richtung bzw. in entgegengesetzter Richtung selbsttätig öffnet und schließt, wobei die Hand in der Schließstellung im Innern des Stocks aufgenommen wird und dazu eingerichtet ist, sich im Innern einer über die Stockspitze gestülpten Hülle zu öffnen. Im geöffneten Zustand nehmen die freien Enden drahtförmiger Finger der Hand eine konische Gestalt an.
Die US 8 714 604 B1 offenbart eine Vorrichtung zum Sammeln von Fäkalien von Haustieren mit einem länglichen Griff, einer Kotschaufel, die eine erste Schaufelbacke und eine gegenüberliegende zweite Schaufelbacke aufweist, die schwenkbar an einem zweiten Ende des Griffs angeordnet ist. Ein Hebel schwenkt die erste Schaufelbacke von der zweiten Schaufelbacke weg in eine offene Position zum Aufnehmen der Fäkalien von einer Bodenoberfläche. Die Vorrichtung verfügt über einen Beutelspender, der an dem Griff angeordnet ist. Einwegbeutel sind nacheinander auf einer Beutelrolle aufgewickelt. Ein Beutel bedeckt die Schaufelinnenfläche vollständig und wickelt sich um die Backenaußenflächen der beiden Schaufelbacken. Ein oberer Rand des Beutels ist an mehreren Ösen befestigt, die an einem hinteren Rand jeder Schaufelbacke angeordnet sind.
Die US 7 523 972 B1 offenbart eine Abfallbeseitigungsvorrichtung mit einem Griff und einer Röhre zum Aufbewahren und Ausgeben von Beuteln. Die Abfallbeseitigungsvorrichtung weist außerdem ein erstes und ein zweites Rahmenelement auf, wobei die Rahmenelemente des Rahmens schwenkbar an einem Gehäuseabschnitt befestigt sind. Ein Betätigungsgriff greift in eine Anordnung aus einer Riemenscheibe und eine Feder ein, die derart arbeitet, dass sie die beiden Rahmenelemente in eine geöffnete und eine geschlossene Position bringt. Auf diese Weise können die Beutel über die Rahmenelemente gezogen und durch Reibung daran gehalten werden, wodurch es einer Person ermöglicht wird, den Abfall aufzunehmen und in dem Beutel aufzunehmen.
Die US 2006 0214442 A1 offenbart eine hygienische Aufnahmevorrichtung umfassend einen länglichen Körper mit einem ersten und einem zweiten Ende sowie einem dazwischen liegenden Mittelabschnitt. Ein fester Bügel und ein beweglicher Bügel sind in der Nähe des ersten Endes und ein Handgriff in der Nähe des zweiten Endes angeordnet. Zwischen dem Handgriff und dem beweglichen Bügel ist ein Aktuator vorgesehen, um den beweglichen Bügel in Richtung des feststehenden Bügels und von dem feststehenden Bügel weg zu bewegen. Die Vorrichtung weist einen Aufbewahrungsfach auf, das an dem Mittelabschnitt angebracht ist, um eine Beutelrolle aufzunehmen. Sobald der Beutel von der Beutelrolle abgetrennt worden ist, kann der abgetrennte Beutel sodann über die Bügel gelegt werden.
Die US 2012 168047 A1 offenbart eine Vorrichtung zum hygienischen Greifen eines Türgriffs. Die Vorrichtung weist in der Nähe ihres proximalen Endes ein Scharnier auf. Distal von dem Scharnier erstrecken sich eine ebene obere und eine untere Platte. Die Platten können relativ flach oder gebogen sein. Im Scharnier kann sich eine Verriegelungs-/Entriegelungsverriegelung befinden. Alternativ kann am distalen Ende der oberen oder unteren Platte oder entlang einer Seite einer oder beider Platten eine Verriegelung vorgesehen sein. An den Wirkstellen der Platten der Greifvorrichtung kann ein Folienvorrat angeordnet sein. Die einzelnen Folienschichten können gezielt abgerissen werden, um sie nach der Verwendung zu entfernen und zu entsorgen, sodass eine frische Folienschicht für den nächsten Gebrauch zur Verfügung steht. Die Folienschichten mit antibakteriellen /antipathogenen Eigenschaften können selbstklebend sein.
Die US 2004/232716 A1 offenbart eine automatisierte Greifvorrichtung zum Greifen und Verpacken von nicht eingepackten, insbesondere zuckerbeschichteten Nahrungsmitteln umfassend mindestens zwei Greiferfinger, die einen Gegenstand, z. B. eine Torte, zwischen sich einklemmen. Ein auf einer Abzugsspule bevorratets Band wird abgezogen und um die Spitze jedes Greiffingers zu einer Aufwickelspule geführt. Jedes Band wird auf die Aufwickelspule gewickelt, während mit Hilfe von Kolben die Greiferfinger nach oben bewegt werden. Die beiden Bänder werden mit der doppelten Geschwindigkeit aufgewickelt mit der die Kolben eingezogen werden, um die Greiferfinger nach oben zu bewegen. Dadurch wird der Gegenstand allmählich aus dem Greifer freigegeben, ohne dass die Greiferfinger auseinander bewegt werden müssen. Der Gegenstand kann daher zuverlässig und genau in einem engen Verpackungsraum platziert werden. Die Klebrigkeit, beispielsweise einer Torte, beeinträchtigt die Genauigkeit der Platzierung nicht. Umgekehrt kann die Entnahme der Torte auch aus einem solchen engen Raum mit nur minimaler Öffnung der Finger erfolgen.
Die bekannten Greifvorrichtungen zum hygienischen Greifen sind für Anwendungen in der Gastronomie und im Lebensmittelhandel nicht geeignet:
   In der Gastronomie und im Lebensmittelhandel werden Mehrwegbehälter für Lebensmittel aus Gründen des Umweltschutzes zunehmend genutzt. Problematisch bei deren Handhabung ist, dass nicht gewährleistet ist, dass einmal genutzte Mehrwegbehälter hygienisch einwandfrei, zumindest aber nicht mit pathogenen Mikroben kontaminiert sind. Zu den über Schmierinfektionen im Lebensmittelbereich übertragenen humanpathogenen Mikroben gehören z.B. Salmonellen, E.coli Serovare wie EHEC und ETEC, Campylobacter, Listerien oder Viren wie das Noro- und Rotavirus. Durch die COVID-19-Pandemie hat das Coronavirus neuen Typs SARS-CoV-2 einen besonderen Stellenwert in der öffentlichen Diskussion und Verantwortliche für Hygienemaßnahmen vor neue Herausforderungen gestellt. Eine Schmierinfektion mit SARS-CoV-2 ist möglich.

Im Betriebsablauf einer typischen Kaffeebar überreichen die meisten Kunden ihre Mehrwegbecher oft direkt dem Barista. Die überreichten Mehrwegbecher sind vom Kunden meistens bereits gespült und makroskopisch sauber. Der Kunde ist nach Gebrauch des kundeneigenen Mehrwegbehälters für die Reinigung selbst verantwortlich. Die direkte Übergabe des kundeneigenen Mehrwegbehälters an eine Servicekraft, die die Befüllung vornimmt, ist aus hygienischen Gründen unvorteilhaft. Die Verwendung von Tabletts zur direkten Übergabe hat den Nachteil, dass eine sichere Handhabung des Mehrwegbehälters auf dem Tablett für die Servicekraft oft schwierig ist, das Tablett selbst eventuell kontaminiert wird und bei ausgebliebener Zwischenreinigung in der Folge eventuell der nächste Mehrwegbehälter kontaminiert wird.

Bekannte Konzepte zum hygienischen Greifen kontaminierter Objekte in der Gastronomie und im Lebensmittelhandel sehen Greifwerkzeuge mit antimikrobiellen und/oder antiviralen Beschichtungen vor, die jedoch keinen vollständigen Schutz bieten, da die mikrobielle oder antibakterielle Belastung durch die Beschichtungen lediglich reduziert wird.

Andere Konzepte zum hygienischen Greifen kontaminierter Objekte in der Gastronomie und im Lebensmittelhandel sehen vor, dass das Greifwerkzeug nach jedem Greifvorgang mit einem Desinfektionsmittel gereinigt wird. Eine ausreichende Einwirkzeit und Konzentration des Desinfektionsmittels muss eingehalten werden, um die Desinfektion zu erreichen.

Die Wirksamkeit von Desinfektionsmaßnahmen mit UV-C-Strahlung hängt entscheidend von der Dosis ab: die Bestrahlungsstärke muss groß genug und die Bestrahlungszeit lang genug sein, um eine desinfizierende Wirkung zu erreichen. Durch die schädliche Wirkung der UV-C-Strahlung auf den Menschen ist eine Anwendung in der Gastronomie und im Lebensmittelhandel aufwendig und erfordert erhebliche Sicherheitsmaßnahmen. Die notwendige Einwirkdauer zum Erreichen einer ausreichenden Strahlendosis macht den Einsatz zudem umständlich und fehleranfällig. Hinzu kommt, dass auch bei im Mittel ausreichender Strahlendosis nicht immer eine vollständige Desinfektion gewährleistet ist, weil z.B. Hinterschneidungen die Wirkung der UV-Strahlung verhindern.

Die vorgenannten Konzepte für den Lebensmittelhandel und die Gastronomie sind daher nicht hinreichend zuverlässig und/oder praktikabel.

Ausgehend von diesem Stand der Technik liegt der Erfindung die Aufgabe zugrunde, eine einfach handhabbare Greifvorrichtung zum hygienischen Greifen von Objekten zur Verfügung zu stellen, die ein rasch aufeinander folgendes hygienisches Greifen, insbesondere von unterschiedlichen, möglicherweise kontaminierten Objekten ermöglicht. Insbesondere soll eine Lösung für das hygienische Greifen von Mehrwegbehältern in der Gastronomie und in Geschäften des Lebensmittelhandels zur Verfügung gestellt werden.

Diese Aufgabe wird durch Greifvorrichtungen gemäß den unabhängigen Ansprüchen 1 und 3 gelöst. Vorteilhafte Ausgestaltungen ergeben sich aus den Merkmalen der Unteransprüche.

Beim Greifen eines ggf. kontaminierten Objektes mit der Greifvorrichtung soll eine Kontamination der Wirkstellen des Greifwerkzeuges wirksam verhindert werden. Die mindestens eine ungebrauchte wirksame Folie dient als Kontaminationsschutz, in dem sie zumindest jede Wirkstelle und ggf. auch weitere Bestandteile des Greifwerkzeugs bedeckt. Die wirksame Folie verhindert einen unmittelbaren Kontakt zwischen dem zu greifenden Objekt und der Wirkstelle. Beim Greifen eines Objektes gelangt nur die dem Objekt zugewandte Seite der wirksamen Folie mit dem Objekt in Kontakt, nicht jedoch das Greifwerkzeug selbst. Dies ermöglicht es, mit demselben Greifwerkzeug ggf. kontaminierte Objekte zu greifen und zu handhaben, ohne dass das Greifwerkzeug kontaminiert wird. In der Regel werden mit der erfindungsgemäßen Greifvorrichtung nacheinander mehrere unterschiedliche Objekte gegriffen, die gegebenenfalls kontaminiert sind und unterschiedliche Kontaminationen aufweisen können. Mit der erfindungsgemäßen Greifvorrichtung gegriffene Objekte sollen nicht durch andere kontaminierte Objekte, die mit derselben Greifvorrichtung zuvor gegriffenen wurden, kontaminiert werden. Die erfindungsgemäße Greifvorrichtung umfasst deshalb den Folienvorrat mit ungebrauchten weiteren Folien zum Ersatz einer gebrauchten, gegebenenfalls kontaminierten wirksamen Folie. Eine ungebrauchte weitere Folie aus dem Folienvorrat wird durch Ersetzen der gebrauchten, gegebenenfalls kontaminierten wirksamen Folie zur ungebrauchten wirksamen Folie. Ein und dasselbe Objekt kann ohne Ersetzen der wirksamen Folie selbstverständlich mehrfach mit dem Greifwerkzeug gegriffen und gehandhabt werden.

Eine wirksame Folie ist gebraucht, wenn sie bestimmungsgemäß in der erfindungsgemäßen Greifvorrichtung benutzt wurde, also beispielsweise mit der erfindungsgemäßen Greifvorrichtung ein und dasselbe Objekt zumindest einmal gegriffen und transportiert wurde. Eine wirksame Folie ist ungebraucht, wenn sie noch nicht bestimmungsgemäß benutzt wurde.

Die wirksame Folie und die weiteren, als Ersatz vorgehaltenen Folien sind homogene Flächengebilde, insbesondere aus sehr dünnem Kunststoff oder Metall; sie dienen zum Trennen der Wirkstellen des Greifwerkzeuges von der Oberfläche des Objektes und verhindern damit wirksam einen Übergang von Kontaminationen vom Objekt über die Wirkstellen auf das Greifwerkzeug. Als Kunststoffmaterial für die Folien kommt z.B. LDPE, d.h. ein Weich-Polyethylen, in Betracht. Die Folie hat beispielsweise eine Stärke von 50 um. LDPE ist geschmacksneutral und geruchlos und eignet sich besonders für die Verwendung in der Gastronomie sowie im Lebensmittelhandel. In seiner Reinform besteht Polyethylen lediglich aus Wasserstoff und Kohlenstoff und ist daher gut recycelbar.

Die Folien können darüber hinaus antimikrobielle Beschichtungen und/oder antivirale Beschichtungen aufweisen, sofern die Hygienestandards für die jeweilige Greifvorrichtung dies erfordern. Die Dicke der zu verwendenden Folien ist an die jeweilige Greifaufgabe anzupassen und beträgt vorzugsweise weniger als 500 um. Die Form und Abmessungen der wirksamen Folie und sämtlicher zu deren Ersatz als Folienvorrat vorgehaltener weiterer Folien stimmen vorzugsweise überein.

Eine Greifvorrichtung mit den Merkmalen des Anspruchs 3 kann als Greifwerkzeug eine Gabel oder eine Zange mit den Merkmalen des Anspruchs 4 aufweisen. Die Gabel kann als Greifwerkzeug für Mehrwegbehälter, beispielsweise Kaffeebecher, zum Einsatz gelangen und bietet gegenüber einer Zange Handhabungsvorteile. Die Gabel umfasst einen Griff sowie die Wirkstellen aufweisende Zinken. Zwischen den beiden im Wesentlichen parallel ausgerichteten Zinken wird der Mehrwegbehälter aufgenommen. Vorzugsweise sind die Zinken der Gabel im Abstand zueinander verstellbar, um den Zinkenabstand an Mehrwegbehälter mit unterschiedlichen Abmessungen anpassen zu können. Eine weitere Anpassungsmöglichkeit an die Form der zu greifenden Mehrwegbehälter besteht darin, dass die vorzugsweise flächig ausgebildeten Zinken um ihre Längsachse verdrehbar und in unterschiedlichen Drehlagen fixierbar sind. Die Handhabungsvorteile der Gabel resultieren daraus, dass Mehrwegbecher üblicherweise in Richtung der Bodenflächen konisch zusammenlaufen und dadurch mittels der voreingestellten Gabel sicher gegriffen werden können, ohne dass die Wirkstellen gegenläufig bewegt werden müssen, wie dies bei einer Zange mit den die Wirkstellen aufweisenden Greifbacken der Fall ist. Grundsätzlich ist jedoch auch eine Zange zum Greifen von Mehrwegbechern geeignet, wobei zwischen den Wirkstellen der Zange und dem Mehrwegbehälter vorzugsweise eine Formpaarung hergestellt wird, sodass der zu greifende Mehrwegbecher und die die Wirkstellen aufweisenden Greifbacken der Zange optimal aufeinander abgestimmt sind.

Unabhängig davon, ob das Greifwerkzeug nun als Gabel oder Zange ausgebildet ist, weisen sowohl die Gabel als auch die Zange zwei das zu greifende Objekt fixierende Wirkstellen auf. Bei der Gabel befinden sich diese an den beiden Gabelzinken, bei der Zange an den Greifbacken.

Die erfindungsgemäße Anordnung der Folien in einem Stapel gemäß den Merkmalen des unabhängigen Anspruchs 1 erlaubt es, sowohl die wirksame Folie als auch die zu deren Ersatz vorgesehenen weiteren Folien platzsparend unmittelbar zumindest über der mindestens einen Wirkstelle anzuordnen. Nach dem bestimmungsgemäßen Gebrauch der äußeren wirksamen Folie auf dem Stapel wird diese entfernt und die darunter liegende ungebrauchte weitere Folie ersetzt die nach dem Greifen eines Objektes gebrauchte wirksame Folie.

Die erfindungsgemäße Greifvorrichtung nach Anspruch 1 mit mindestens einem Folienstapel ist für einen Einsatz in der Automatisierungstechnik bestimmt. Abweichend zu von Hand betätigten Greifwerkzeugen haften die Folien in dem Stapel des mindestens einen Folienvorrats nicht aufeinander, sodass die äußere wirksame Folie auf dem Stapel nach deren Gebrauch automatisiert entfernbar ist. Hierzu wird die Glätte der Oberfläche jeder Folie derart bestimmt, dass die äußere Folie auf dem Stapel von der jeweils darunterliegenden Folie durch Verschieben entfernbar ist. Die Bestimmung der für das Verschieben im Einzelfall erforderlichen Gleitreibung zwischen den Folien unter Berücksichtigung der Reibungskoeffizienten des Folienmaterials ist dem Fachmann geläufig. Das Greifwerkzeug der Greifvorrichtung nach Anspruch 1 ist ein Greifer, der mindestens eine Greifbacke aufweist. Um die nicht aufeinander haftenden Folien in dem Stapel zusammenzuhalten weist jede Greifbacke eine Halterung zur Aufnahme des Stapels und eine kraftbeaufschlagte Greiffläche auf, wobei die Halterung derart eingerichtet ist, dass die äußere Folie auf dem Stapel, d.h. die wirksame Folie ausschließlich an einer, vorzugsweise ebenen Oberfläche der Halterung durch Verschieben in der vorzugsweise ebenen Oberfläche entfernbar ist und die kraftbeaufschlagte Greiffläche einen Druck auf den Stapel in Richtung der ebenen Oberfläche der Halterung ausübt.

Die Halterung kann den Folienstapel nach Art eines Rahmens aufnehmen, wobei der Rahmen an der ebenen Oberfläche eine Durchtrittsöffnung zum Entfernen der äußeren Folie durch Verschieben in Richtung der Durchtrittsöffnung aufweist. Die Greiffläche ist kraftbeaufschlagt, um einen Druck auf den Stapel in Richtung der ebenen Oberfläche der Halterung auszuüben, so dass sich die äußere Folie auf dem Stapel, d.h. die wirksame Folie, beim Greifvorgang stets an der Oberfläche der Halterung der Greifbacke befindet. Die Kraftbeaufschlagung der Greiffläche kann beispielsweise durch ein elastisches Element, wie mindestens eine Feder oder ein unter Druck stehendes Medium bewirkt werden, das auf die dem Folienstapel abgewandte Seite der Greiffläche wirkt.

Die mindestens eine Greifbacke ist, wie bei Greifern üblich, mit einem Antriebssystem verbunden, das die bereitgestellte Energie in Bewegung umsetzt. Die Energie kann mechanisch, hydraulisch, pneumatisch oder elektrisch bereitgestellt werden. Das Antriebssystem kann z.B. ein Aktor sein, der eine Linearbewegung ausführt.

Eine einfache Möglichkeit zum automatisierten Entfernen der äußeren Folie auf dem Stapel durch Verschieben besteht in der Ausgestaltung des Anspruchs 2 darin, dass zwischen zwei gegenläufig auf das Objekt fixierend einwirkenden Greifbacken des Greifers zeitweilig ein rotierender Aktor derart einbringbar ist, dass durch Rotation des Aktors die jeweils äußere Folie des Stapels durch Verschieben in entgegengesetzter Richtung entfernbar ist. Der rotierende Aktor kann beispielsweise ein Reibrad sein, das mit den beiden äußeren Folien gleichzeitig in Eingriff steht.

Für das Verschieben der Folien muss das Material eine ausreichende Festigkeit aufweisen, um Stauchungen zu vermeiden. Dies geschieht durch geeignete Materialauswahl und -stärke, abhängig von der Form und Größe der Folie. Als Material kommt beispielsweise PET in Betracht.

In der Ausführungsform der Greifvorrichtung nach dem unabhängigen Anspruch 3 wird die mindestens eine ein zu greifendes Objekt fixierende Wirkstelle des Greifwerkzeuges durch einen ungebrauchten wirksamen Folienabschnitt mindestens eines Folienbandes bedeckt. Unter einem Folienband wird ein im Verhältnis zur Breite längeres, streifenartiges Folienstück bezeichnet. Das Folienband ist in Folienabschnitte übereinstimmender Größe unterteilt, die in Längsrichtung des Folienbandes hintereinander angeordnet sind. Der die zumindest eine Wirkstelle des Greifwerkzeuges bedeckende wirksame Folienabschnitt wird nach dessen bestimmungsgemäßen Gebrauch durch einen ungebrauchten weiteren Folienabschnitt des Folienbandes ersetzt. Vorzugsweise handelt es sich um den zu dem wirksamen Folienabschnitt unmittelbar benachbarten weiteren Folienabschnitt. Der Folienvorrat sind die ungebrauchten weiteren Folienabschnitte, die durch das Verschieben sukzessiv den jeweils gebrauchten wirksamen Folienabschnitt ersetzen. Der Folienvorrat kann beispielsweise auf eine Spule oder Rolle aufgewickelt und von dieser kontinuierlich abgezogen werden.

Bei bestimmungsgemäßem Gebrauch der erfindungsgemäßen Greifvorrichtung nach Anspruch 3 wird nur der wirksame Folienabschnitt des Folienbandes beim Greifvorgang verwendet und ggf. kontaminiert. Die ungebrauchten weiteren Folienabschnitte des Folienbandes kommen indes mit dem zu greifenden Objekt nicht in Kontakt. Der nach dem Greifen eines Objektes gebrauchte wirksame Folienabschnitt kann nach dem Ersetzen durch einen ungebrauchten weiteren Folienabschnitt von dem Folienband abgetrennt werden. Hierzu kann an einem von Hand betätigten Greifwerkzeug beispielsweise eine Schneid- oder Abreißkante angeordnet sein.

Der Einsatz eines Folienbandes ist insbesondere beim Einsatz der Greifvorrichtung in der Automatisierungstechnik von Vorteil, da sich die Weiterbewegung des Folienbandes leicht automatisieren lässt, insbesondere in dem das Folienband in einem Rolle zu Rolle Prozess geführt wird.

Zu den Materialeigenschaften und der Dicke des Folienbandes wird auf die Ausführungen zu den einzelnen Folien einer Greifvorrichtung nach den Merkmalen des Anspruchs 1 Bezug genommen.

Eine kompakte Integration des Folienvorrats in ein Greifglied des Greifwerkzeuges bei zugleich einfacher Bereitstellung des Antriebs für die Weiterbewegung des Folienbandes nach bestimmungsgemäßem Gebrauch des wirksamen Folienabschnitts wird dadurch erreicht, dass
- das Greifwerkzeug mindestens ein Greifglied aufweist, wobei an dem mindestens einen Greifglied eine Wirkstelle und mindestens zwei im Abstand zueinander angeordnete Rollen angeordnet sind,
- das Folienband des Folienvorrats um die mindestens zwei Rollen gewickelt ist, wobei zwischen zwei Rollen an dem Greifglied die Wirkstelle des Greifwerkzeugs angeordnet ist und
- der ungebrauchte wirksame Folienabschnitt in der äußeren Lage des gewickelten Folienbandes die Wirkstelle bedeckt,
- wobei der gebrauchte wirksame Folienabschnitt durch Abwickeln der äußeren Lage des Folienbandes von den mindestens zwei Rollen entfernbar und durch einen der ungebrauchten weiteren Folienabschnitte des Folienbandes ersetzbar ist.

Die Weiterbewegung der Folienbahn kann beispielsweise dadurch erfolgen, dass zumindest eine der mindestens zwei Rollen zur Aufnahme des Folienvorrats motorisch angetrieben ist.

Nachfolgend wird die Erfindung anhand von Ausführungsbeispielen näher erläutert. Es zeigen
- **Figur 1**: eine Seitenansicht einer ersten, nicht zur Erfindung gehörigen Ausführungsform eines als Gabel ausgebildeten Greifwerkzeugs einer Greifvorrichtung mit Folien,
- **Figur 2**: eine Seitenansicht einer zweiten, nicht zur Erfindung gehörigen Ausführungsform eines als Zange ausgebildeten Greifwerkzeugs einer Greifvorrichtung mit Folien,
- **Figur 3a,b**: eine Greifbacke eines als Greifer ausgebildeten Greifwerkzeugs einer für die Automatisierungstechnik eingerichteten Greifvorrichtung mit Folien in Vorder- und Seitenansicht,
- **Figur 4**: eine Darstellung einer Greifvorrichtung mit zwei Greifbacken nach Figur 3,
- **Figur 5a,b**: eine Aufsicht und Seitenansicht einer ersten Ausführungsform einer Greifbacke eines als Zange oder Greifer ausgebildeten Greifwerkzeugs einer Greifvorrichtung mit einem Folienband,
- **Figur 6a,b**: eine Aufsicht und Seitenansicht einer zweiten, nicht zur Erfindung gehörigen Ausführungsform einer Greifbacke eines als Zange oder Greifer ausgebildeten Greifwerkzeugs einer Greifvorrichtung mit einem Folienband,
- **Figur 7**: eine Seitenansicht einer ersten, nicht zur Erfindung gehörigen Ausführungsform eines als Greifer ausgebildeten Greifwerkzeugs mit zwei Greifbacken einer Greifvorrichtung mit einem Folienband,
- **Figur 8**: eine Variante der nicht zur Erfindung gehörigen Ausführungsform der Greifvorrichtung nach Figur 7,
- **Figur 9a**: eine Seitenansicht einer nicht zur Erfindung gehörigen Ausführungsform eines als Sauggreifer ausgebildeten Greifwerkzeugs einer Greifvorrichtung mit einem Folienband und
- **Figur 9b**: eine teilweise Aufsicht auf die nicht zur Erfindung gehörige Ausführungsform der Greifvorrichtung nach Figur 9a.

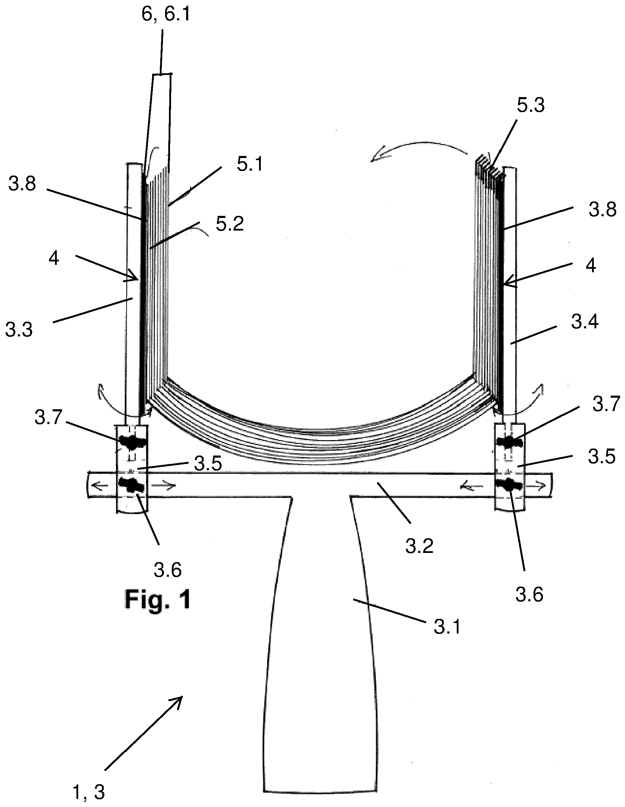

Figur 1 zeigt eine nicht erfindungsgemäße Greifvorrichtung (1) zum hygienischen Greifen eines in Figur 1 nicht dargestellten Objektes (2), beispielsweise eines Mehrwegbehälters für Getränke. Die Greifvorrichtung (1) umfasst ein als Gabel (3) ausgestaltetes Greifwerkzeug, das einen in einem Gestell (3.2) einmündenden Griff (3.1) aufweist. An dem Gestell (3.2) sind zwei flächige Zinken (3.3, 3.4) im Abstand zueinander verstellbar befestigt. Die Abstandsverstellung erfolgt im Ausführungsbeispiel mittels entlang des Gestells (3.2) verschieblich angeordneter Halteblöcke (3.5), die die Zinken (3.3, 3.4) aufnehmen und mittels Klemmschrauben (3.6) an dem Gestell fixierbar sind. Zusätzlich können die flächigen Zinken (3.3., 3.4) mit ihren zylindrischen Endabschnitten in entsprechenden Bohrungen der Halteblöcke (3.5, 3.6) um ihre Längsachse verdreht und in den Halteblöcken (3.5) mit weiteren Klemmschrauben (3.7) fixiert werden.

Durch das Einstellen des Abstandes der Zinken (3.3, 3.4) sowie deren Drehung um die Längsachse ist eine Anpassung der Gabel (3) an die Größe und Form der zu greifenden, üblicherweise konischen Mehrwegbehälter möglich. Die Zinken (3.3, 3.4) fixieren den im Querschnitt runden Mehrwegbehälter in einem mittleren Bereich der Zinken (3.3, 3.4), an den sogenannten Wirkstellen (4). Die beiden Wirkstellen (4) der Gabel (3) werden von einer einzigen wirksamen Folie (5.1) bedeckt, die beim Greifen mit dem Mehrwegbehälter in Kontakt gelangt. Die wirksame Folie (5.1) steht als einzige in unmittelbarem Kontakt mit dem zu greifenden Objekt (2) und verhindert wirksam eine Kontamination des Greifwerkzeuges.

Unter der wirksamen Folie (5.1) sind ungebrauchte weitere Folien (5.2) als Ersatz für eine nach dem Greifen des Mehrwegbehälters gebrauchte wirksame Folie (5.1) angeordnet. Die weiteren Folien (5.2) bilden einen Folienvorrat (6) in Form eines Stapels (6.1). Die Folien (5.1, 5.2) in dem Stapel (6.1) haften aufeinander, wobei jede der Folien (5.1, 5.2) an einem der seitlichen Ränder eine Abziehhilfe (5.3) aufweist, um die jeweils äußere, wirksame Folie (5.1) auf dem Stapel (6.1) von der jeweils darunterliegenden weiteren Folie (5.2) abzulösen. Die Abziehhilfe (5.3) ist ein mit einer Decklage versehener Abschnitt der mit einem Haftklebstoff einseitig beschichteten Folien (5.1, 5.2).

Ein und dasselbe Objekt, beispielsweise ein Mehrwegbehälter, kann mehrfach mit einer wirksamen Folie (5.1) gegriffen und anschließend gehandhabt werden. Wird jedoch ein neuer Mehrwegbehälter mit der Gabel (3) gegriffen, wird zunächst die gebrauchte wirksame Folie (5.1) unter Verwendung der Abziehhilfe (5.3) von der darunter liegenden weiteren Folie (5.2) des Folienvorrats (6) abgezogen, sodass die darunter liegende weitere Folie zur wirksamen Folie (5.1) wird. Nun kann ein anderer Mehrwegbehälter ohne das Risiko einer Kontamination des Greifwerkzeuges gegriffen und gehandhabt werden.

Sind sämtliche Folien (5.2) des Folienvorrats (6) aufgebraucht, kann der Folienvorrat (6) dadurch ersetzt werden, dass ein auf einem zweiteiligen Träger (3.8) vorkonfektionierter unverbrauchter Stapel (6.1) an den Zinken (3.3, 3.4) befestigt wird.

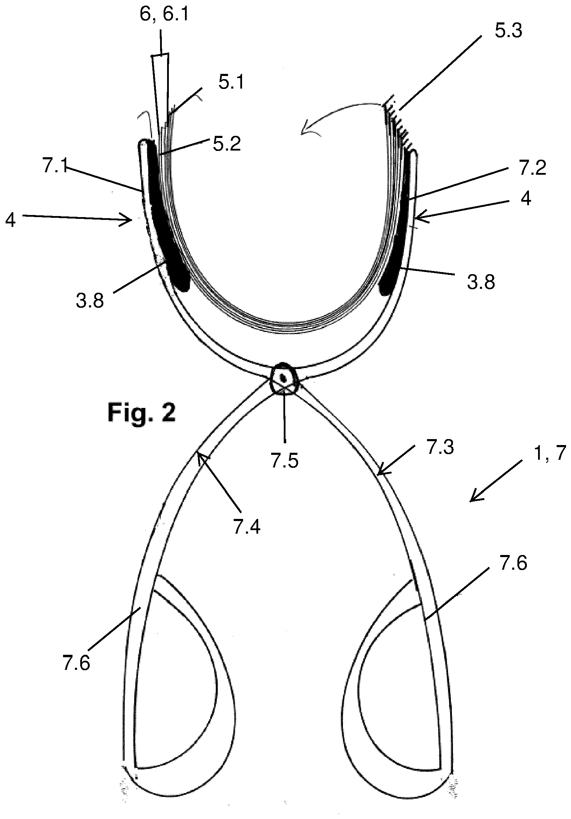

Figur 2 zeigt eine weitere nicht erfindungsgemäße Greifvorrichtung (1), deren Greifwerkzeug eine Zange (7) ist. Die Zange (7) ist als zweischenkliges Handwerkzeug ausgestaltet, bei dem die Greifbacken (7.1, 7.2) als Wirkstellen (4) gegenläufig auf das zu fixierende Objekt, insbesondere einen Mehrwegbehälter, einwirken. Die beiden die Greifbacken (7.1, 7.2) aufweisenden zweiseitigen Hebel (7.3, 7.4) sind miteinander durch ein Gelenk (7.5) verbunden. Die längeren Hebelarme der beiden Hebel (7.3, 7.4) bilden den Griff (7.6) der Zange (7).

Die wirksame Folie (5.1) sowie die weiteren Folien (5.2) des als Stapel (6.1) ausgebildeten Folienvorrats (6)sind in vergleichbarer Weise mittels eines zweiteiligen Trägers (3.8) mit dem Greifwerkzeug verbunden, nämlich an den gegenläufig wirkenden Greifbacken (7.1, 7.2).

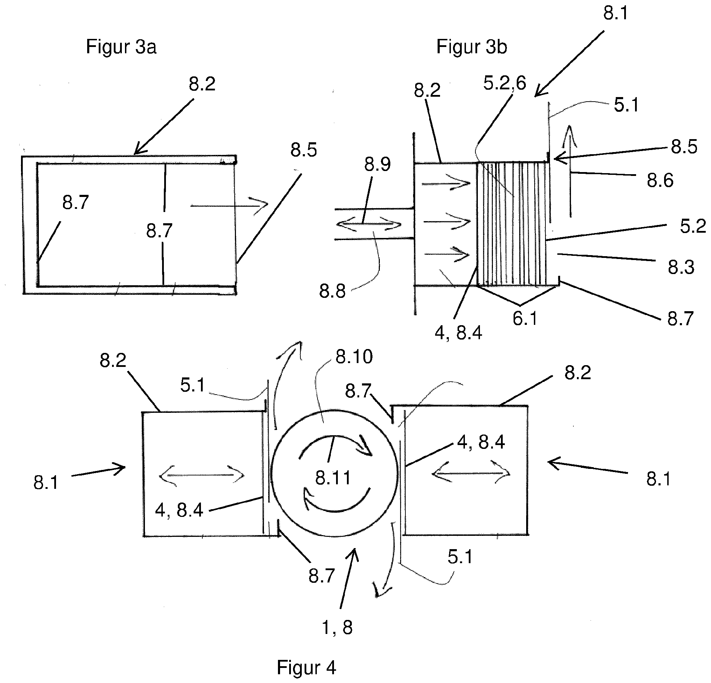

Figur 3 b zeigt eine Greifbacke (8.1) eines als Greifer (8) ausgestalteten Greifwerkzeuges einer erfindungsgemäßen Greifvorrichtung (1). Sowohl die wirksame Folie (5.1) als auch die weiteren Folien (5.2) des Folienvorrats (6) sind, wie bei den Ausführungsbeispielen nach Figuren 1 und 2, in einem Stapel (6.1) zusammengefasst. Zur Aufnahme des Stapels (6.1) verfügt jede Greifbacke (8.1) über eine Halterung (8.2), wobei die Halterung (8.2) derart eingerichtet ist, dass die äußere wirksame Folie (5.1) auf dem Stapel (6.1) ausschließlich an einer ebenen Oberfläche (8.3) der Halterung (8.2) durch Verschieben in der Ebene der Oberfläche (8.3) entfernbar ist, wie es durch den Pfeil (8.6) in Figur 3b angedeutet ist.

Eine kraftbeaufschlagte Greiffläche (8.4) übt als Wirkstelle (4) der Greifbacke (8.1) permanent einen Druck auf den Stapel (6.1) in Richtung der ebenen Oberfläche (8.3) der Halterung (8.2) aus. Hierdurch ist gewährleistet, dass sich an der Oberfläche (8.3) der Halterung (8.2) stets eine wirksame Folie (5.1) befindet, die die Wirkstelle (4) bedeckt. Um die äußere Folie in der Ebene der Oberfläche (8.3) der Halterung (8.2) verschieben zu können, sind an drei Längsseiten der Oberfläche rahmenartig, sich in die Ebene der Oberfläche erstreckende Abschnitte (8.7) angeordnet, sodass die wirksame Folie (5.1) lediglich an den drei Abschnitten (8.7) des nicht geschlossenen Rahmens anliegt. An einer Längsseite befindet sich eine Öffnung (8.5), durch die die äußere Folie (5.1) durch Verschieben entfernbar ist (vgl. Figur 3a).

Die Folien (5.1, 5.2) in dem Stapel (6.1) haften nicht aufeinander. Vielmehr ist die Glätte der Oberfläche jeder Folie (5.1, 5.2) derart bestimmt, dass die äußere Folie (5.2) auf dem Stapel von der jeweils darunterliegenden weiteren Folie (5.2) durch Verschieben in Richtung des Pfeils (8.6) entfernbar ist. Der Zusammenhalt des Stapels (6.1) wird dadurch gewährleistet, dass die Folien (5.1, 5.2) in dem Stapel (6.1) zwischen der kraftbeaufschlagten Greiffläche (8.4) und den Abschnitten (8.7) vorgespannt sind. Die Kraftbeaufschlagung der Greiffläche (8.4) erfolgt im dargestellten Ausführungsbeispiel durch ein nicht näher dargestelltes Federpaket, das permanent eine Druckkraft auf die dem Stapel (6.1) abgewandte Seite der Greiffläche (8.4) ausübt.

Die dargestellte Greifbacke (8.1) ist mit einem Aktor (8.8) verbunden, der im dargestellten Ausführungsbeispiel eine Linearbewegung der Greifbacke (8.1) in Richtung des Pfeils (8.9) ermöglicht.

Figur 4 zeigt eine erfindungsgemäßen Greifvorrichtung (1) die zwei gegenläufig wirkende Greifbacken (8.1) nach Figur 3 aufweist, wobei die Öffnungen (8.5) für das Entfernen der jeweils äußeren Folie (5.1) in entgegengesetzter Richtung orientiert sind. Diese Anordnung der beiden Greifbacken (8.1) ermöglicht es, zeitweilig einen rotierenden Aktor (8.10), beispielsweise in Form eines Reibrads, zwischen die beiden Greifbacken (8.1) einzubringen, wobei durch die Rotation des rotierenden Aktors (8.10) in Richtung des Pfeils (8.11) gleichzeitig die jeweils äußere Folie (5.1) entfernt wird.

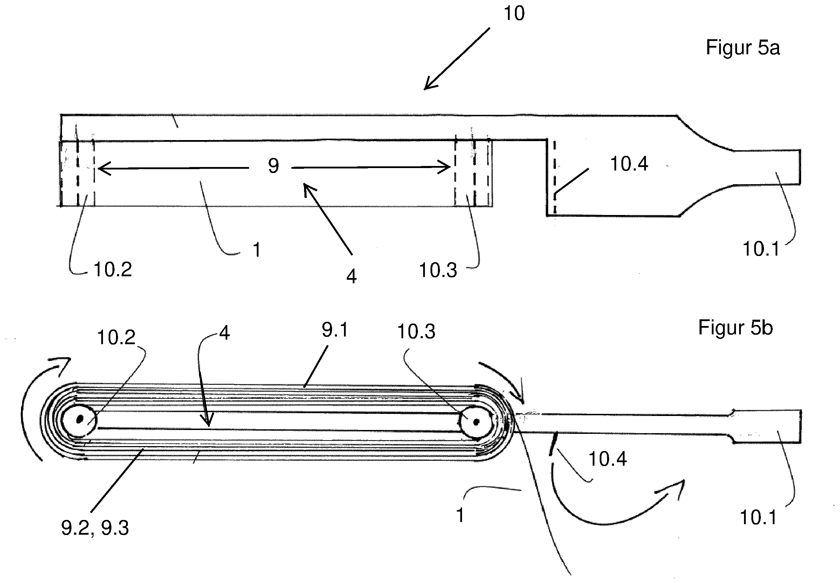

Figur 5 bis 9 betreffen sämtlich Greifvorrichtungen zum hygienischen Greifen eines Objektes, die ein Greifwerkzeug, insbesondere in Form eines Greifers mit mindestens einer ein zu greifendes Objekt (2) fixierende Wirkstelle (4) aufweisen. Anstelle eines Stapels (6.1) von Folien (5.1, 5.2) umfassen die Greifvorrichtungen nach den Figuren 5-9 ein Folienband (9) mit einem wirksamen Folienabschnitt (9.1), wobei der wirksame Folienabschnitt (9.1) des mindestens einen Folienbandes (9) zumindest jede Wirkstelle (4) des Greifwerkzeuges bedeckt und beim Greifen eines Objektes (2) mit dem zu greifenden Objekt (2) in Kontakt gelangt. Den Folienvorrat (10) bilden bei diesen Greifvorrichtungen ungebrauchte, weitere Folienabschnitte (9.2) des Folienbandes (9). Die weiteren Folienabschnitte (9.2) ersetzen ein nach dem Greifen eines Objektes gebrauchten wirksamen Folienabschnitt (9.1). Ein gebrauchter wirksamer Folienabschnitt (9.1) wird von der Wirkstelle (4) des Greifwerkzeuges wegbewegt und durch einen angrenzenden ungebrauchten, weiteren Folienabschnitt (9.2) ersetzt, der nun die Funktion des wirksamen Folienabschnitts (9.1) übernimmt und beim Greifen eines anderen Objektes (2) mit dem zu greifenden Objekt (2) in Kontakt gelangt. Indem bei jedem Greifvorgang von unterschiedlichen Objekten (2) ein ungebrauchter wirksamer Folienabschnitt (9.1) mit dem zu greifenden Objekt in Kontakt gelangt, ist das Greifwerkzeug vor einer Kontamination durch das zu greifende Objekt (2) geschützt und eine Kreuzkontamination zwischen nacheinander zu greifenden Objekten ist ausgeschlossen.

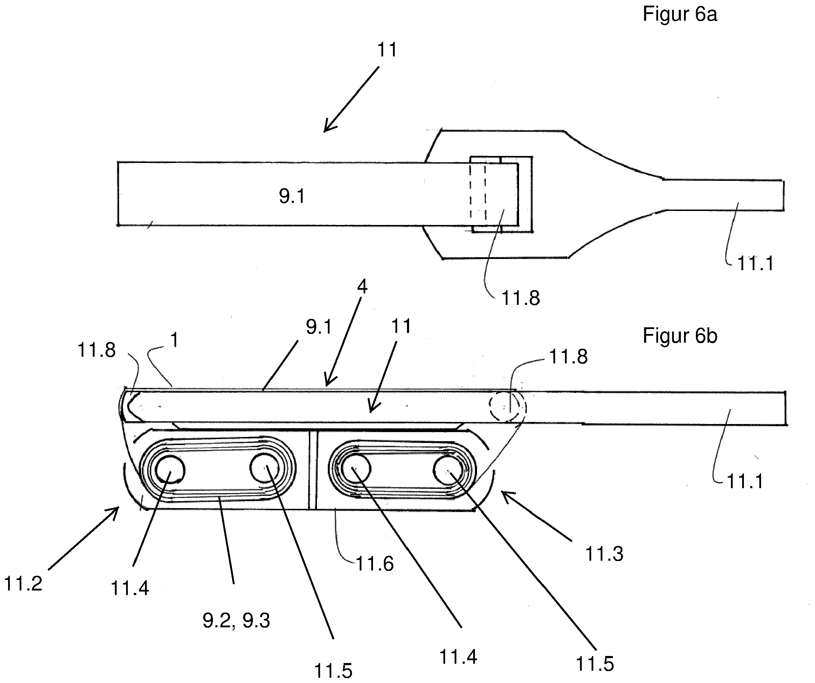

Nachfolgend werden nun anhand der Figuren 5-9 unterschiedliche Greifwerkzeuge näher erläutert, deren Hygienekonzept auf der Abschirmung jeder Wirkstelle durch mindestens ein Folienband (9) basiert: Figuren 5a, 5b zeigen lediglich ein Greifglied (10) eines erfindungsgemäßen Greifwerkzeuges, das in Figur 5 nicht vollständig dargestellt ist. Das Greifglied (10) kann eine Greifbacke eines Greifers zum Einsatz in der Automatisierungstechnik sein, jedoch grundsätzlich auch beispielsweise ein Zinken (3.4) einer Gabel (3), wie sie anhand von Figur 2 näher erläutert wurde. Endseitig weist das Greifglied (10) einen Einsatz (10.1) auf, der die Verankerung des Greifgliedes (10) beispielsweise an einem Greifer oder an einem der Halteblöcke (3.5) der Gabel (3) erlaubt. An jedem Greifglied (10) sind eine das zu greifende Objekt (2) fixierende Wirkstelle (4) und zwei im Abstand zueinander angeordnete Rollen (10.2, 10.3) angeordnet, wobei das Folienband (9) um die beiden Rollen (10.2, 10.3) gewickelt ist. Weiter ist erkennbar, dass die Wirkstelle (4) an dem Greifglied (10) zwischen den beiden Rollen innerhalb des aufgewickelten Folienbandes (9) liegt. Der wirksame Folienabschnitt (9.1) befindet sich in der äußeren Lage des aufgewickelten Folienbandes (10) und bedeckt die Wirkstelle (4). Ein nach dem Greifen eines Objektes (2) gebrauchter wirksamer Folienabschnitt (9.1) wird durch Abwickeln der äußeren Lage des Folienbandes (9) von den beiden Rollen (10.2, 10.3) entfernt und durch einen ungebrauchten weiteren Folienabschnitt (9.2) des Folienbandes (9) ersetzt. Der gebrauchte wirksame Folienabschnitt (9.1) kann händisch an einer Schneidkante (10.4) abgetrennt werden. Figuren 6a, 6b zeigen lediglich ein Greifglied (11) eines nicht erfindungsgemäßen Greifwerkzeuges, das in Figur 6 nicht vollständig dargestellt ist. Das Greifglied (11) kann eine Greifbacke eines Greifers zum Einsatz in der Automatisierungstechnik sein, jedoch grundsätzlich auch beispielsweise ein Zinken (3.4) einer Gabel (3), wie sie anhand von Figur 2 näher erläutert wurde.

An dem Greifglied (11) ist eine das zu greifende Objekt fixierende Wirkstelle (4), eine Abgabevorrichtung (11.2) und eine Aufnahmevorrichtung (11.3) für das Folienband (9) angeordnet. Ein ungebrauchter wirksamer Folienabschnitt (9.1) bedeckt die zwischen Abgabevorrichtung (11.2) und Aufnahmevorrichtung (11.3) angeordnete Wirkstelle (4). Ein gebrauchter wirksamer Folienabschnitt (9.1) wird durch Abziehen des Folienbandes (9) aus der Abgabevorrichtung (11.2) durch einen ungebrauchten weiteren Folienabschnitt (9.2) des Folienbandes (9) ersetzt. Der gebrauchte wirksame Folienabschnitt (9.1) wird von der Aufnahmevorrichtung (11.3) aufgenommen.

Aus der Seitenansicht nach Figur 6b ist erkennbar, wie das Folienband (9) über eine Umlenkung (11.7) an der vorderen Stirnseite des Greifgliedes (11) auf den die Wirkstelle (4) bildenden Oberflächenbereich des Greifgliedes (11) umgelenkt und anschließend über eine Umlenkrolle (11.8) zu der Aufnahmevorrichtung (11.3) geführt wird. Der wirksame Folienabschnitt (9.1) wird über die Wirkstelle (4) einlagig gleitend geführt.

Sowohl die Abgabevorrichtung (11.2) als auch die Aufnahmevorrichtung (11.3) weisen jeweils zwei im Abstand zueinander angeordnete Rollen (11.4 bzw. 11.5) auf, um die das Folienband (9) gewickelt ist. In der Abgabevorrichtung (11.2) befindet sich der Folienvorrat (9.3) mit den ungebrauchten weiteren Folienabschnitten (9.2).

Die Abgabevorrichtung (11.2) und die Aufnahmevorrichtung (11.3) sind in einem Gehäuse (11.6) untergebracht, das lösbar an dem Greifglied (11) befestigt ist. Sobald der Folienvorrat (9.3) erschöpft ist, kann dieser durch Austausch des kassettenartigen Gehäuses (11.6) ersetzt werden. Die Rollen (11.4, 11.5) der Aufnahmevorrichtung (11.3) können motorisch angetrieben sein, sodass die Weiterbewegung des Folienbandes (9) entlang der Wirkstelle (4) automatisch ausgeführt wird.

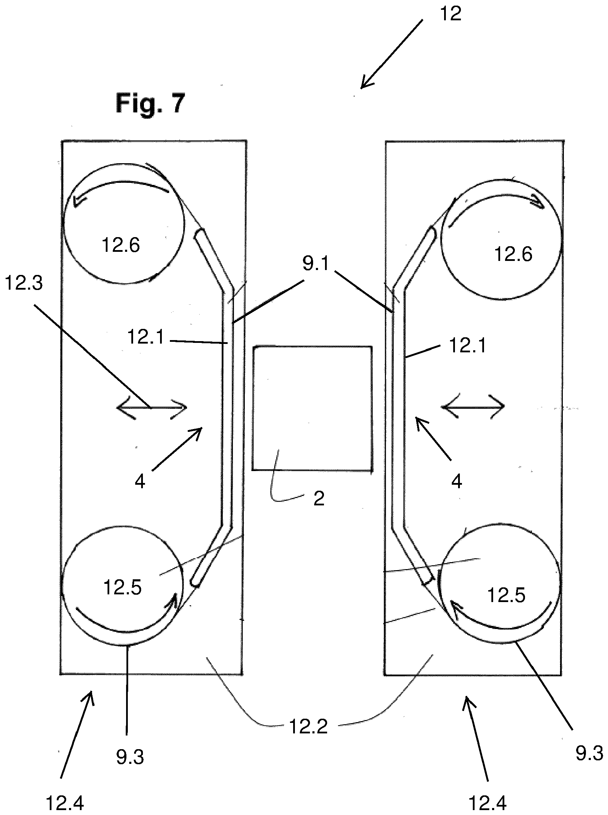

Figur 7 zeigt eine nicht erfindungsgemäße Greifvorrichtung (1) die als Greifwerkzeug einen Greifer (12) aufweist. Der Greifer (12) weist zwei Greifglieder (12.4) auf, die mittels eines nicht dargestellten Antriebs gegenläufig in Richtung des Pfeils (12.3) bewegbar sind. Jedes Greifglied (12.4) verfügt über eine an einer Trägerplatte (12.2) angeordnete Greifbacke (12.1), eine Rolle (12.5) zur Aufnahme des Folienvorrats (9.3) sowie eine weitere Rolle (12.6), auf die gebrauchte wirksame Folienabschnitte (9.1) aufgewickelt werden. Die Rollen (12.5,12.6) sind derart an der Trägerplatte (12.2) angeordnet, dass der wirksame Folienabschnitt (9.1) über die Wirkstellen (4) an den Greifbacken (12.1) einlagig gleitend geführt wird. Das zwischen den beiden Greifgliedern (12.4) des Greifers (12) zu greifende Objekt (2) wird durch Kraftpaarung gehalten.

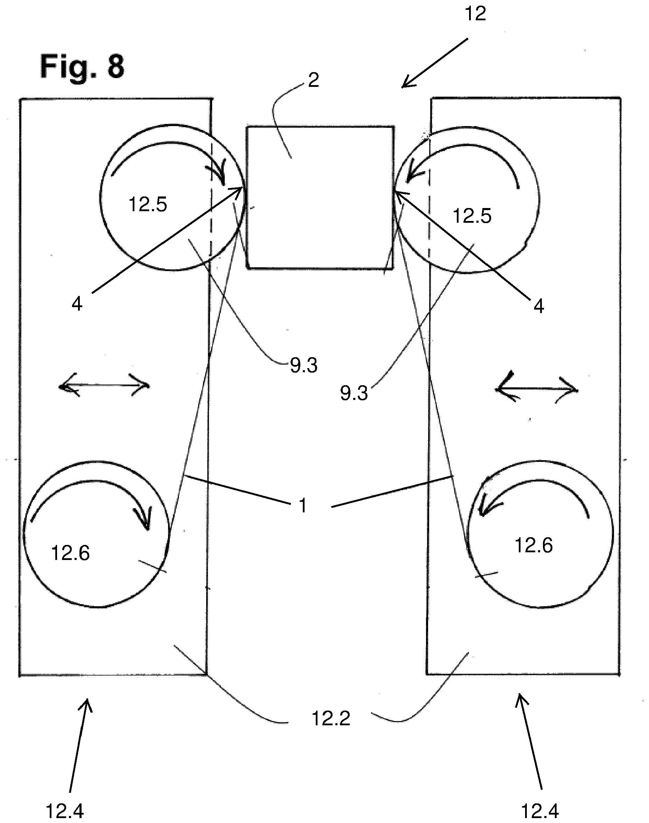

Figur 8 zeigt einen im Aufbau mit dem Greifer nach Figur 7 weitgehend übereinstimmenden Greifer (12), der sich insoweit unterscheidet, dass anstelle der Greifbacke die den Folienvorrat (9.3) aufnehmende Rolle (12.5) zugleich die Wirkstelle (4) der beiden Greifglieder (12.4) bildet. Im Übrigen stimmt die Funktion und Wirkungsweise des Greifers (12) überein.

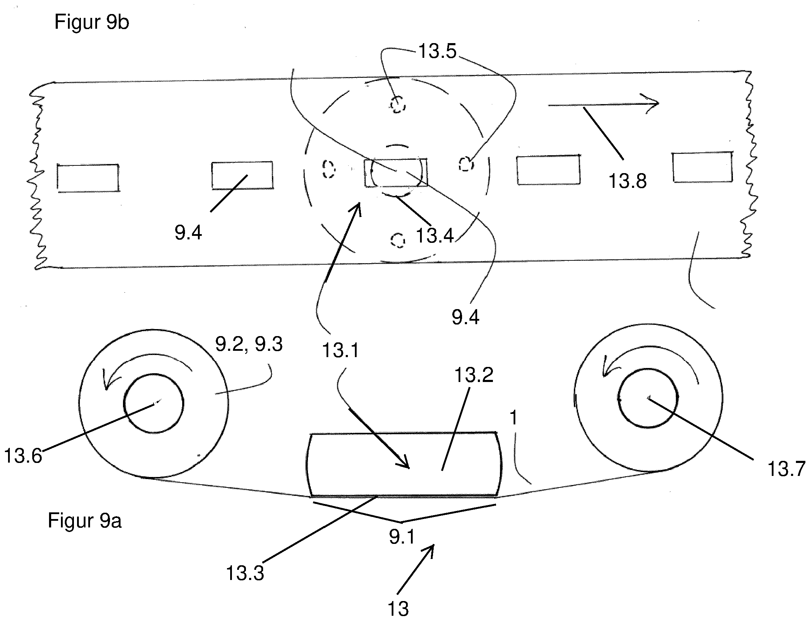

Figuren 9a,b zeigen eine weitere nicht erfindungsgemäße Greifvorrichtung für den Einsatz in der Automatisierungstechnik wobei das Greifwerkzeug ein Sauggreifer (13) mit einer Ansaugvorrichtung (13.1) ist. Eine Kammer (13.2) der Ansaugvorrichtung (13) ist an einen nicht dargestellten Unterdruckerzeuger angeschlossen. Die Kammer (13.2) verfügt an einer ebenen Oberfläche (13.3) über eine Saugöffnung (13.4), an der ein niedrigerer Druck als der Umgebungsdruck herrscht, nämlich mit dem in der Kammer (13.2) herrschende Unterdruck. Sowohl der wirksame Folienabschnitt (9.1) als auch die weiteren Folienabschnitte (9.2) weisen jeweils eine mittig in jedem Abschnitt angeordnete, im Ausführungsbeispiel rechteckige Öffnung (9.4) in dem Folienband (9) auf, die bei einer Bewegung des Folienbandes (9) entlang der Saugöffnung (13.4) mit dieser in Überdeckung gelangt. Durch die mit der Saugöffnung (13.4) fluchtende rechteckige Öffnung (9.4) im Folienband wird das zu greifende, in der Figur 10 nicht dargestellte Objekt (2) angesaugt und von der Ansaugvorrichtung (13.1) des Sauggreifers (13) gehalten. Konzentrisch zu der Saugöffnung (13.4) sind zusätzliche Ansaugöffnungen (13.5) an der Oberfläche (13.3) der Ansaugvorrichtung (13.1) angeordnet, die ebenfalls mit einem gegenüber dem Umgebungsdruck niedrigeren Druck beaufschlagt sind, nämlich mit dem in der Kammer (13.2) herrschenden Unterdruck. Jede der Ansaugöffnungen (13.5) ist bei einer Bewegung des Folienbandes (9) permanent von dem Folienband (9) überdeckt. Die weiteren Ansaugöffnungen (13.5) tragen daher zur Fixierung des Folienbandes (9) an der Oberfläche (13.3) bei. Der Folienvorrat (9.3) wird von einer Rolle (13.6) abgezogen. Gebrauchte wirksame Folienabschnitte (9.1) des Folienbandes (9) werden anschließend auf der Rolle (13.7), die in Bewegungsrichtung des Folienbandes (9) hinter der Ansaugvorrichtung (13.1) liegt, aufgewickelt.

### Bezugszeichenliste

| **Nr.** | **Bezeichnung** | **Nr.** | **Bezeichnung** |
|---|---|---|---|
| 1 . | Greifvorrichtunq | 8.3 | Oberfläche |
| 2. | Objekt | 8.4 | Greiffläche |
| 3. | Gabel | 8.5 | Öffnung |
| 3.1 | Griff | 8.6 | Pfeil |
| 3.2 | Gestell | 8.7 | Abschnitt der Halterung |
| 3.3 | Zinken | 8.8 | Aktor (Linear) |
| 3.4 | Zinken | 8.9 | Pfeil Linearbewegung |
| 3.5. | Halteblöcke | 8.10 | Aktor (Rotierend) |
| 3.6 | Klemmschraube | 8.11 | Pfeil (Rotation) |
| 3.7 | Klemmschraube | 9. | Folienband |
| 3.8 | Träger | 9.1 | Wirksamer Folienabschnitt |
| 4. | Wirkstelle | 9.2 | Weiterer Folienabschnitt |
| 5. | Folie | 9.3 | Folienvorrat |
| 5.1 | Wirksame Folie | 9.4 | Rechteckige Öffnung |
| 5.2 | Weitere Folie | 10. | Greifglied |
| 5.3 | Abziehhilfe | 10.1 | Einsatz |
| 6. | Folienvorrat | 10.2 | Rolle |
| 6.1 | Stapel | 10.3 | Rolle |
| 7. | Zange | 10.4 | Schneidkante |
| 7.1 | Greifbacke | 11. | Greifglied |
| 7.2 | Greifbacke | 11.1 | Einsatz |
| 7.3 | Zweiseitiger Hebel | 11.2 | Abgabevorrichtung |
| 7.4 | Zweiseitiger Hebel | 11.3 | Aufnahmevorrichtung |
| 7.5 | Gelenk | 11.4 | Rolle |
| 7.6 | Griff | 11.5 | Rolle |
| 8 . | Greifer | 11.6 | Gehäuse |
| 8.1 | Greifbacke | 11.7 | Umlenkung |
| 8.2 | Halterung | 11.8 | Umlenkrolle |
| | | | |
| | | 12. | Greifer |
| | | 12.1 | Greifbacke |
| | | 12.2 | Trägerplatte |
| | | 12.3 | Pfeil (Linearbewegung) |
| | | 12.4 | Greifglied |
| | | 12.5 | Rolle |
| | | 12.6 | Rolle |
| | | 13. | Sauggreifer |
| | | 13.1 | Ansaugvorrichtung |
| | | 13.2 | Kammer |
| | | 13.3 | Oberfläche |
| | | 13.4 | Saugöffnung |
| | | 13.5 | Ansaugöffnung |
| | | 13.6 | Rolle |
| | | 13.7 | Rolle |
| | | 13.8 | Pfeil (Bewegung |
| | | | Folienband) |

## Patentansprüche

1. Greifvorrichtung (1) zum hygienischen Greifen eines Objekts (2) umfassend
- ein Greifwerkzeug mit mindestens einer ein zu greifendes Objekt (2) fixierenden Wirkstelle (4),
- mindestens eine ungebrauchte wirksame Folie (5.1), wobei die mindestens eine ungebrauchte wirksame Folie (5.1) zumindest jede Wirkstelle (4) bedeckt und beim Greifen eines Objekts (2) mit dem zu greifenden Objekt (2) in Kontakt gelangt und
- mindestens einen am Greifwerkzeug befestigten Folienvorrat (6) mit ungebrauchten weiteren Folien (5.2) zum Ersatz einer gebrauchten wirksamen Folie (5.1), wobei der mindestens eine Folienvorrat (6) einen Stapel (6.1) mit den ungebrauchten weiteren Folien (5.2) aufweist und die ungebrauchte wirksame Folie (5.1) eine äußere Folie auf dem Stapel (6.1) ist,
wobei
- die Folien (5.1, 5.2) in dem Stapel (6.1) nicht aufeinander haften und die Glätte der Oberfläche jeder Folie (5.1,5.2) derart bestimmt ist, dass die äußere Folie auf dem Stapel (6.1) von der jeweils darunter liegenden weiteren Folie (5.2) durch Verschieben entfernbar ist,
- die Greifvorrichtung einen Greifer (8) mit mindestens einer Greifbacke (8.1) aufweist,
- jede Greifbacke (8.1) eine Halterung (8.2) zur Aufnahme des Stapels (6.1) und eine kraftbeaufschlagte Greiffläche (8.1) aufweist,
- wobei die Halterung (8.2) derart eingerichtet ist, dass die äußere Folie auf dem Stapel (6.1) ausschließlich an einer Oberfläche (8.3) der Halterung (8.2) durch Verschieben entfernbar ist und
- die kraftbeaufschlagte Greiffläche (8.1) einen Druck auf den Stapel (6.1) in Richtung der Oberfläche (8.3) der Halterung (8.2) ausübt.

2. Greifvorrichtung (1) nach Anspruch 1, **dadurch gekennzeichnet, dass** zwischen zwei gegenläufig auf das Objekt (2) fixierend einwirkenden Greifbacken (8.1) des Greifers (8) zeitweilig ein rotierender Aktor (8.10) derart einbringbar ist, dass durch Rotation des Aktors (8.10) die jeweils äußere Folie des Stapels (6.1) durch Verschieben entfernbar ist.

3. Greifvorrichtung (1) zum hygienischen Greifen eines Objekts (2) umfassend
- ein Greifwerkzeug mit mindestens einer ein zu greifendes Objekt fixierenden Wirkstelle (4), wobei das Greifwerkzeug mindestens ein Greifglied (10) aufweist und an dem mindestens einen Greifglied (10) die mindestens eine Wirkstelle (4) und mindestens zwei im Abstand zueinander angeordnete Rollen (10.2,10.3) angeordnet sind,
- einen ungebrauchten wirksamen Folienabschnitt (9.1) mindestens eines Folienbandes (9), wobei der ungebrauchte wirksame Folienabschnitt (9.1) des mindestens einen Folienbandes (9) zumindest jede Wirkstelle (4) bedeckt und beim Greifen eines Objekts (2) mit dem zu greifenden Objekt (2) in Kontakt gelangt,
und
- mindestens einen am Greifwerkzeug befestigten Folienvorrat (9.3) mit ungebrauchten weiteren Folienabschnitten (9.2) des mindestens einen Folienbandes (9.3) zum Ersatz eines gebrauchten wirksamen Folienabschnitts (9.1), wobei
- das Folienband (9) des Folienvorrats (9.3) um die mindestens zwei Rollen (10.2,10.3) gewickelt ist,
- zwischen den mindestens zwei Rollen (10.2,10.3) an dem Greifglied (10) die Wirkstelle (4) angeordnet ist,
- der ungebrauchte wirksame Folienabschnitt (9.1) in der äußeren Lage des gewickelten Folienbandes (9) die Wirkstelle (4) bedeckt und
- der gebrauchte wirksame Folienabschnitt durch Abwickeln der äußeren Lage des Folienbandes (9) von den mindestens zwei Rollen (10.2,10.3) entfernbar und durch einen ungebrauchten weiteren Folienabschnitt(9.2) des Folienbandes (9) ersetzbar ist.

4. Greifvorrichtung nach Anspruch 3, **dadurch gekennzeichnet, dass** das Greifwerkzeug eine Gabel (3) mit die Wirkstellen (4) aufweisenden Zinken (3.3,3.4) oder eine Zange (7) mit die Wirkstellen (4) aufweisenden Greifbacken (7.1,7.2) ist.

5. Greifvorrichtung nach Anspruch 4, **dadurch gekennzeichnet, dass** die Zinken (3.3,3.4) der Gabel (3) im Abstand zueinander verstellbar sind und /oder um ihre Längsachse verdrehbar und in unterschiedlichen Drehlagen fixierbar sind.

6. Greifvorrichtung nach Anspruch 3, **dadurch gekennzeichnet, dass** das Greifwerkzeug ein Greifer (8,12) ist.

## Claims

1. Gripping device (1) for the hygienic gripping of an object (2) comprising
- a gripping tool with at least one active point (4) fixing an object (2) to be gripped,
- at least one unused effective film (5.1), wherein the at least one unused effective film (5.1) covers at least each active point (4) and, when gripping an object (2), comes into contact with the object (2) to be gripped and
- at least one film supply (6) attached to the gripping tool with additional unused films (5.2) to replace a used effective film (5.1), wherein the at least one film supply (6) comprises a stack (6.1) with the unused further films (5.2) and the unused effective film (5.1) is an outer film on the stack (6.1), wherein
- the films (5.1, 5.2) in the stack (6.1) do not stick to each other and the smoothness of the surface of each film (5.1, 5.2) is determined in such a manner that the outer film on the stack (6.1) can be removed from the other film (5.2) located underneath by displacement,
- the gripping device has a gripper (8) with at least one gripping jaw (8.1),
- each gripping jaw (8.1) has a holder (8.2) for receiving the stack (6.1) and a force-loaded gripping surface (8.1),
- wherein the holder (8.2) is adapted in such a manner that the outer film on the stack (6.1) can be removed by displacement exclusively on one surface (8.3) of the holder (8.2) and
- the force-loaded gripping surface (8.1) exerts pressure on the stack (6.1) in the direction of the surface (8.3) of the holder (8.2).

2. Gripping device (1) according to Claim 1, **characterized in that** a rotating actuator (8.10) can be temporarily introduced between two gripping jaws (8.1) of the gripper (8) which act in opposite directions to fix the object (2) in such a manner that the respective outer film of the stack (6.1) can be removed by displacement by rotation of the actuator (8.10).

3. Gripping device (1) for the hygienic gripping of an object (2) comprising
- a gripping tool with at least one active point (4) fixing an object to be gripped, wherein the gripping tool has at least one gripping member (10) and the at least one active point (4) and at least two rollers (10.2, 10.3) are arranged at a distance from one another are arranged on the at least one gripping member (10),
- an unused effective film section (9.1) of at least one film strip (9), wherein the unused effective film section (9.1) of the at least one film strip (9) covers at least each active point (4) and, when gripping an object (2), comes into contact with the object (2) to be gripped
and
- at least one film supply (9.3) attached to the gripping tool with unused additional film sections (9.2) of the at least one film strip (9.3) for replacing a used effective film section (9.1), wherein
- the film strip (9) of the film supply (9.3) is wound around the at least two rollers (10.2, 10.3),
- the active point (4) is arranged between the at least two rollers (10.2, 10.3) on the gripping member (10) and
- the unused effective film section (9.1) in the outer layer of the wound film strip (9) covers the active point (4) and
- the used effective film section can be removed by unwinding the outer layer of the film strip (9) from the at least two rollers (10.2, 10.3) and can be replaced by an unused further film section (9.2) of the film strip (9).

4. Gripping device according to Claim 3, **characterized in that** the gripping tool is a fork (3) with tines (3.3, 3.4) having the active points (4) or a pair of pliers (7) with gripping jaws (7.1, 7.2) having the active points (4).

5. Gripping device according to Claim 4, **characterized in that** the tines (3.3, 3.4) of the fork (3) are adjustable in distance from one another and/or are rotatable about their longitudinal axis and fixable in different rotational positions.

6. Gripping device according to Claim 3, **characterized in that** the gripping tool is a gripper (8, 12).

## Revendications

1. Dispositif de préhension (1), destiné à la préhension hygiénique d'un objet (2), comprenant
- un outil de préhension, pourvu d'au moins un point d'action (4) fixant un objet (2) à prendre,
- au moins un film actif (5.1) inutilisé, l'au moins un film actif (5.1) inutilisé recouvrant au moins chaque point d'action (4) et lors de la préhension d'un objet (2), entrant en contact avec l'objet (2) à prendre et
- au moins une réserve de film (6) fixée sur l'outil de préhension, pourvue de films (5.2) inutilisés supplémentaires, destinés à remplacer un film (5.1) actif utilisé, l'au moins une réserve de film (6) comportant une pile (6.1) avec les films (5.2) inutilisés supplémentaires et le film actif (5.1) inutilisé étant un film extérieur sur la pile (6.1),
- les films (5.1, 5.2) n'adhérant pas les uns aux autres dans la pile (6.1) et le caractère lisse de la surface de chaque film (5.1, 5.2) étant déterminé de telle sorte que le film extérieur sur la pile (6.1) puisse être retiré par déplacement du film (5.2) supplémentaire respectivement sous-jacent,
- le dispositif de préhension comportant un grappin (8) pourvu d'au moins une mâchoire de préhension (8.1),
- chaque mâchoire de préhension (8.1) comportant un support (8.2), destiné à recevoir la pile (6.1) et une surface de préhension (8.1) sollicitée par une force,
- le support (8.2) étant configuré de telle sorte que le film extérieur sur la pile (6.1) soit susceptible d'être retiré par déplacement exclusivement sur une surface (8.3) du support (8.2) et
- que la surface de préhension (8.1) sollicitée par une force exerce sur la pile (6.1) une pression en direction de la surface (8.3) du support (8.2).

2. Dispositif de préhension (1) selon la revendication 1, **caractérisé en ce qu'**entre deux mâchoires de préhension (8.1) du grappin (8) agissant à contresens en fixant l'objet (2), un actionneur (8.10) rotatif est susceptible d'être introduit temporairement de telle sorte que par une rotation de l'actionneur (8.10), le film respectivement extérieur de la pile (6.1) soit susceptible d'être retiré par déplacement.

3. Dispositif de préhension (1), destiné à la préhension hygiénique d'un objet (2), comprenant
- un outil de préhension pourvu d'au moins un point d'action (4) fixant un objet à prendre, l'outil de préhension comportant au moins un élément de préhension (10) et sur l'au moins un élément de préhension (10) étant placés l'au moins un point d'action (4) et au moins deux rouleaux (10.2,10.3) placés avec un écart mutuel,
- un segment de film actif (9.1) inutilisé d'au moins une bande (9) de film, le segment de film actif (9.1) inutilisé de l'au moins une bande (9) de film recouvrant au moins chaque point d'action (4) et lors de la préhension d'un objet (2), entrant en contact avec l'objet (2) à prendre,
et
- au moins une réserve de film (9.3) fixée sur l'outil de préhension, avec des segments de film (9.2) inutilisés supplémentaires de l'au moins une bande (9.3) de film, pour le remplacement d'un segment de film actif (9.1) utilisé,
- la bande (9) de film de la réserve de film (9.3) étant enroulée autour des au moins deux rouleaux (10.2, 10.3),
- entre les aux moins deux rouleaux (10.2,10.3), le point d'action (4) étant placé sur l'élément de préhension (10),
- le segment de film actif (9.1) inutilisé dans la couche extérieure de la bande (9) de film enroulée recouvrant le point d'action (4) et
- le segment de film actif utilisé étant susceptible d'être retiré des au moins deux rouleaux (10.2, 10.3) par déroulement de la couche extérieure de la bande (9) de film et d'être remplacé par un segment de film (9.2) inutilisé supplémentaire de la bande (9) de film.

4. Dispositif de préhension selon la revendication 3, **caractérisé en ce que** l'outil de préhension est une fourche (3) pourvue de dents (3.3, 3.4) comportant les points d'action (4) ou une pince (7) pourvue de mâchoires de préhension (7.1, 7.2) comportant les points d'action (4).

5. Dispositif de préhension selon la revendication 4, **caractérisé en ce que** les dents (3.3, 3.4) de la fourche (3) sont ajustables avec un écart mutuel et / ou sont susceptibles d'être tournées autour de leur axe longitudinal et fixées dans différentes positions de rotation.

6. Dispositif de préhension selon la revendication 3, **caractérisé en ce que** l'outil de préhension est un grappin (8, 12).
